# EUROPÄISCHE PATENTANMELDUNG

(11) **EP 2 700 889 A1**
(43) Veröffentlichungstag der Anmeldung: **26.02.2014**
(21) Anmeldenummer: 13003702.1
(22) Anmeldetag: 24.07.2013
(51) Int. Cl.: F24J 3/08, F03G 7/04, E21B 7/20

(54) **Endstück für das Rohrpaar einer Erdwärmesonde**

(30) Priorität: 22.08.2012 DE 102012016533
(71) Anmelder: Stüwa Konrad Stükerjürgen GmbH, 33397 Rietberg (DE)
(72) Erfinder: Stükerjürgen, Ralf, 33397 Rietberg (DE)
(74) Vertreter: Brandt, Detlef

(57) **Zusammenfassung**

Es wird ein Endstück für das Rohrpaar einer Erdwarmesonde mit einem Haltekörper (3) für eine Vorlaufleitung (1) und eine Rücklaufleitung (2) einer Erdwärmesondenanlage, an dessen unterem, den leitungsabgewandten Ende ein im Querschnitt gegenüber dem Querschnitt des Haltekörpers (3) verkleinertes Fußteil (4) angeordnet ist, vorgestellt, bei dem erfindungsgemäß das Endstück eine Verrastungsvorrichtung aufweist, bestehend aus einem am Fußteil (4) angeordneten Aufnahmeelement (6) und einem am oberen, dem leitungszugewandten Ende angeordneten korrespondierenden Einschubteil (7), wobei die Verrastungsvorrichtung eine Kopplung zweier Endstücke durch Einführen des Einschubteiles (7) in das Aufnahmeelement (6) ermöglicht.

## Beschreibung

### Technisches Umfeld

Die Erfindung betrifft ein Endstück für das Rohrpaar einer Erdwärmesonde mit den im gattungsbildenden Teil des Anspruches 1 genannten Merkmalen.

### Stand der Technik

Erdwärmesonden werden im zunehmenden Maße zur Ausnutzung der Erdwärme als Wärmetauscher verwendet. Die Erdwärmesonden werden dabei in Bohrlöcher eingeführt, die in der Regel einen Querschnitt aufweisen, welcher aus Kostengründen nur unwesentlich größer bemessen ist als der Querschnitt der in das Bohrloch einzubringenden Erdwärmesonde. Da in den Bohrlöchern darüber hinaus oftmals Grundwasser vorhanden ist, wirken insbesondere auf das Endstück einer Erdwärmesonde beim Eindringen in das Bohrloch nicht unbeträchtliche Kräfte, die sowohl das Endstück wie auch die daran angebrachten Vorlaufleitungen und Rücklaufleitungen hoch beanspruchen.

Es hat sich deshalb im Stand der Technik als vorteilhaft erwiesen, die in Rede stehenden Endstücke im Querschnitt konisch auszubilden, so dass die am unteren freien Ende vorhandene Spitze das Einführen der Endstücke in das Bohrloch erleichtert.

Aufgrund geothermischer Randbedingungen ist oftmals die Notwendigkeit gegeben, eine Erdwärmesonde nicht nur aus einer Vorlaufleitung und einer Rücklaufleitung aufzubauen, sondern jeweils zwei Leitungspaare in ein Bohrloch einzubringen. Für diese Fallkonstellation sind aus dem Stand der Technik entsprechende Endstücke bekannt, die nur für den Zweck konzipiert sind, vier Rohrleitungen zu bündeln. Dies bringt naturgemäß entsprechende Lagerhaltungskosten für diese Spezialteile mit sich.

### Aufgabe der Erfindung

Ausgehend von dem geschilderten Stand der Technik ist es Aufgabe der Erfindung, ein Endstück für das Rohrpaar einer Erdwärmesonde bereitzustellen, welches leicht in ein vorhandenes Bohrungsloch eingeführt werden kann und welches die Möglichkeit bietet, je nach Gegebenheit zwei oder vier Rohrleitungen in ein dafür konzipiertes Bohrloch einzubringen.

### Lösung der Aufgabe

Die geschilderte Aufgabe wird erfindungsgemäß in Zusammenschau mit den gattungsbildenden Merkmalen durch die im kennzeichnenden Teil des Anspruches 1 offenbarte technische Lehre gelöst.

Erfindungswesentlich ist es, dass das Endstück eine Verrastungsvorrichtung aufweist, bestehend aus einem am Fußteil angeordneten Aufnahmeelement und einem am oberen dem leitungszugewandten Ende angeordneten korrespondierenden Einschubteil, wobei die Verrastungsvorrichtung eine Koppelung zweier Endstücke durch Einführen des Einschubteiles eines Endstückes in das Aufnahmeelement des zweiten Endstückes ermöglicht.

Durch die geschilderte erfindungsgemäße Gestaltung ist es nunmehr möglich, aus dem Endstück für ein Rohrpaar einer Erdwärmesonde auch ein Endstück zu konzipieren, welches jeweils zwei Rohrpaare miteinander bündelt. Zusätzlicher Vorteil der erfindungsgemäßen Gestaltung ist es, dass die miteinander koppelbaren Endetücke in ihrer Höhe zueinander versetzt zusammengebaut werden können. Auf diese Weise lässt sich der Querschnitt des aus den beiden Endstücken zusammengesetzten Gesamtbauteiles im kritischen unteren Bereich der Erdwärmesonde im Querschnitt reduzieren, so dass das Einführen des Gesamtbauteiles aus zwei Erdwärmesonden signifikant erleichtert wird.

Besondere Ausgestaltungen des Gegenstandes der Erfindung ergeben sich zusätzlich aus den Merkmalen der auf den Anspruch 1 rückbezogenen Unteransprüche.

Es hat sich insbesondere als vorteilhaft erwiesen, das Aufnahmeelement als parallel zur Mittellängsachse des Endstückes verlaufende nutförmige Ausnehmung auszubilden. Eine derartige Ausbildung ist herstellungstechnisch durch die Tatsache, dass die in Rede stehenden Endstücke aus Kunststoff hergestellt werden, einfach zu realisieren.

Eine im Querschnitt kreisförmige Ausbildung der Ausnehmung erleichtert dabei das Einführen des Einschubteiles in das Aufnahmeelement. Natürlich ist es denkbar, Aufnahmeteil und Einschubelement als sogenannte Schwalbenschwanzkombination auszubilden, falls dies aus Festigkeitsgründen vorteilhaft erscheint.

Es hat sich für das erfindungsgemäße Endstück zusätzlich als zweckmäßig erwiesen, an der dem Einschubteil gegenüberliegenden Seite des Endstückes ein zusätzliches Aufnahmeelement für ein Einschubteil anzuordnen. Durch diese Maßnahme wird die Möglichkeit geschaffen, die erfindungsgemäßen Endstücke in ihrer Höhe versetzt zueinander anzuordnen oder parallel nebeneinander miteinander zu koppeln. Für bestimmte Anwendungsfälle kann eine Koppelung zweier Endstücke auf gleicher Höhe zweckmäßig sein.

Es hat sich darüber hinaus als vorteilhaft erwiesen, wenn das Fußteil eine oder mehrere Ausnehmung(en) zur Festlegung eines Gewichtes aufweist. Diese Ausnehmung kann als Durchgangsbohrung ausgebildet sein, welche mit einer umlaufenden Wulst zur Verengung des Bohrungsdurchmessers versehen ist. In die Durchgangsbohrung ist mittels einer Schraube oder eines Befestigungsbolzens ein Gewicht festlegbar, welches das Einführen und Absenken der Erdwärmesonde im Bohrloch insbesondere dann erleichtert, falls dieses mit Grundwasser gefüllt sein sollte.

Die Befestigung des Gewichtes kann insbesondere bei Verwendung eines Befestigungsbolzens vollkommen werkzeuglos erfolgen. Die Festlegung innerhalb der Durchgangsbohrung kann darüber hinaus zusätzlich erleichtert werden, wenn der Befestigungsbolzen eine umlaufende Haltenut aufweist, in die der innerhalb der Durchgangsbohrung angeordnete Wulst einrastbar ist.

Um beim Eindringen des Endstückes in das Bohrloch eine turbulente Strömung an der äussere Oberfläche des Endstückes zu erzeugen, was den Einführvorgang erleichtert, kann dieses Endstück mindestens an der äusseren Oberfläche des Haltekörpers eine wellenförmige Maserung aufweisen. Die Maserung trägt darüber hinaus nicht unwesentlich zu einer Verbesserung der Anhaftung der in das Bohrloch eingebrachten Suspension zur Fixierung der Erdwärmesonde an der äusseren Oberfläche des Endstückes bei.

Diese Maserung kann aus mehreren nebeneinander angeordneten wellenförmigen länglich geformten nutförmigen Vertiefungen bestehen. Alternativ ist auch eine stegförmig über die Oberfläche des Haltekörpers vorspringende Ausgestaltung der Maserung denkbar.

Als zusätzlich vorteilhaft für die Handhabung der Endstücke auf der Baustelle hat sich erwiesen, wenn das Endstück mindestens an seinem Tragkörper eine Beschichtung in einer Signalfarbe aufweist. Die Signalfarbe zeigt den vor Ort tätigen Fachleuten an, dass es sich bei dem Endstück um ein sicherheitsrelevantes Bauteil handelt, für dessen Handhabung besondere Sorgfalt und Vorsicht angezeigt ist.

Um beim Eindringen des Endstückes in das Bohrloch wie oben bereits erwähnt eine turbulente Strömung an der äussere Oberfläche des Endstückes zu erzeugen, kann die Beschichtung mit Partikeln, beispielsweise Sandkörnern, angereichert werden, welche eine äussere angerauhte Oberfläche erzeugen. Als Beschichtungsmaterial ist eine Kunststofffarbe oder dergleichen vorteilhaft. Die angerauhte Oberfläche verbessert zusätzlich die Anhaftung der in das Bohrloch eingebrachten Suspension zur Fixierung der Erdwärmesonde an der äusseren Oberfläche des Endstückes.

### Figurenbeschreibung

Nachfolgend wird ein Endstück für das Rohrpaar einer Erdwärmesonde mit den erfindungswesentlichen Merkmalen in unterschiedlichen Varianten erläutert. Es zeigt:
- Figur 1: die perspektivische Seitendarstellung eines erfindungsgemäßen Endstückes für das Rohrpaar einer Erdwärmesonde,
- Figur 2: eine perspektivische Seitendarstellung der gegenüberliegenden Seite des Endstückes aus Figur 1,
- Figur 3: eine perspektivische Darstellung zweier in versetzter Anordnung zusammengebauter Endstücke,
- Figur 4: eine perspektivische Darstellung zweier nebeneinander zusammengebauter Endstücke
- Figur 5: eine Schnittdarstellung durch das Fußteil eines erfindungsgemäßen Endstückes und
- Figur 6: eine Schnittdarstellung entsprechend Figur 5 mit eingesetztem Halte-bolzen

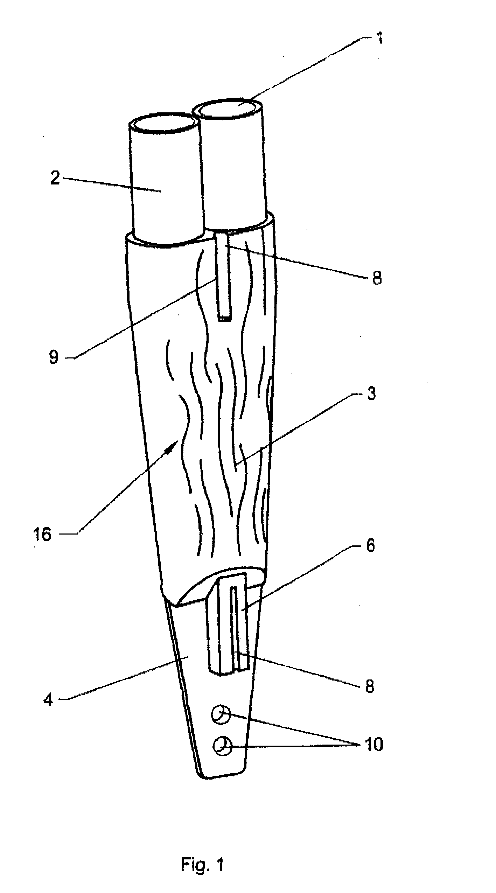

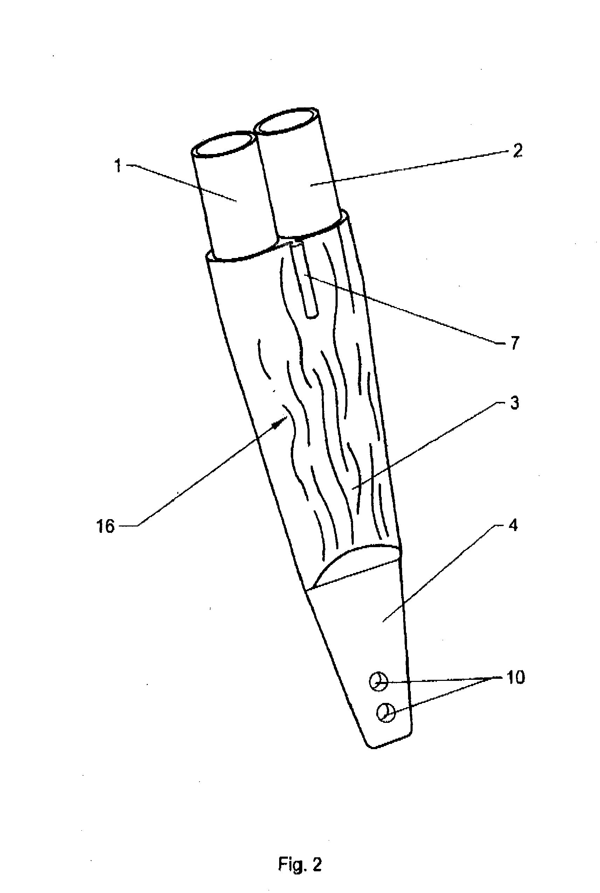

Das in den Figuren 1 und 2 in Einzeldarstellung gezeigte Endstück für das Rohrpaar einer Erdwärmesonde besteht im Wesentlichen aus einem Haltekörper 3, in welchem eine Vorlaufleitung 1 und eine Rücklaufleitung 2 münden. Im Innern sind die Enden der Vorlaufleitung 1 und Rücklaufleitung 2 durch einen Verbindungskanal miteinander gekoppelt, so dass das in den Leitungen befindliche flüssige Wärmeträgermedium zirkulieren kann.

Am unteren Ende des Haltekörpers 3 ist an diesem ein Fußteil 4 angeformt. Fußteil 4 und Haltekörper 3 sind so ausgebildet, dass sie sich von der Oberseite des Haltekörpers 3, an dem die Vorlaufleitung 1 und die Rücklaufleitung 2 angeordnet sind, hin zum freien Ende des Fußteiles 4 im Querschnitt reduzieren. Auf diese Weise wird das Einführen eines erfindungsgemäßen Endstückes in ein Bohrloch erleichtert.

Aus der Figur 1 ist ersichtlich, dass das Endstück in seinem unteren Fußbereich 4 ein Aufnahmeelement 6 aufweist. Das Aufnahmeelement 6 ist Teil einer Verrastungsvorrichtung, die die Koppelung zwei Endstücke miteinander ermöglicht.

Zu diesem Zweck gehört zur Verrastungsvorrichtung zusätzlich ein Einschubteil 7, welches - wie dies aus Figur 2 ersichtlich ist - an derjenigen Seite des Endstückes angeordnet ist, welche dem Aufnahmeelement 6 abgewandt ist. Das Einschubteil 7 besteht im Wesentlichen aus einem im Querschnitt runden Vorsprung, der im oberen Bereich des Haltekörpers 3 sich befindet.

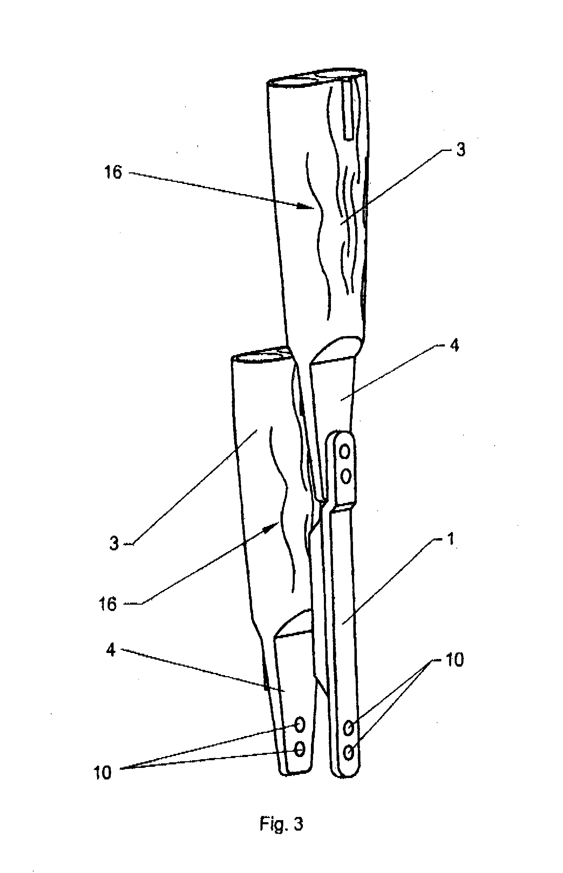

Wie aus der Gesamtschau der Abbildungen 1 und 2 hervorgeht, wird das Einschubteil 7 in eine nutförmig parallel zur Mittellängsachse des Endstückes verlaufenden Ausnehmung 8 des Aufnahmeelementes 6 eingeschoben. Ist dies geschehen, so ergibt sich eine versetzte Anordnung zweier Endstücke übereinander, wie dies in der Figur 3 gezeigt ist.

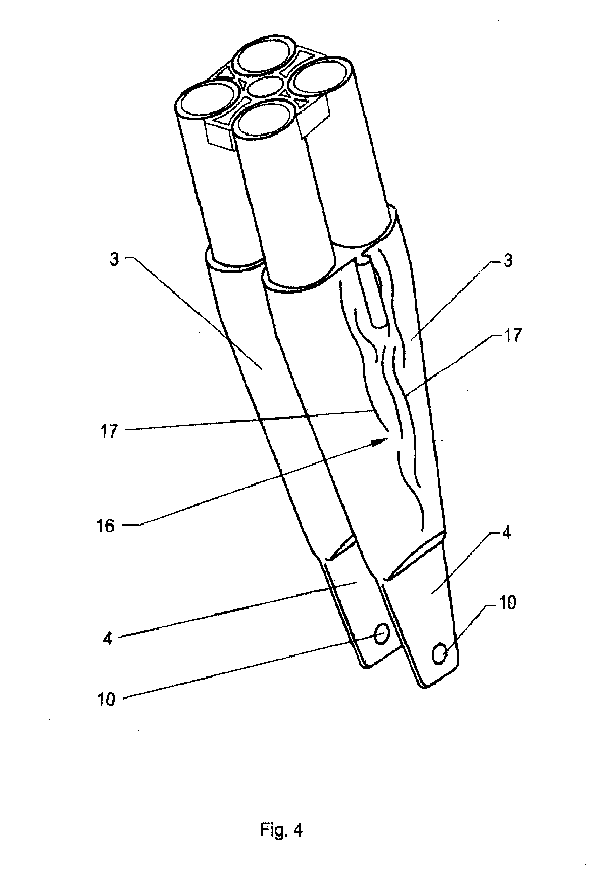

Aus der Figur 1 ergibt sich ergänzend, dass ein zusätzliches Aufnahmeelement in Form einer parallel zur Mittellängsachse des Endstückes verlaufenden nutförmigen Ausnehmung zusätzlich im oberen Bereich des Haltekörpers 3 an der gleichen Seitenfläche wie das Aufnahmeelement 6 angeordnet ist. In dieses weitere Aufnahmeelement 9, welches im Querschnitt korrespondierend zum Einschubteil 7 ausgestaltet ist, kann dieses Einschubteil 7 ebenfalls eingebracht werden. Diese Fallkonstellation führt zu einem Zusammenbauzustand zweier Endstücke, wie sie in der Figur 4 gezeigt ist. In diesem Fall sind die Endstücke parallel nebeneinander angeordnet, was für bestimmte Anwendungsfälle vorteilhaft sein kann.

Insbesondere aus den Figuren 1 und 2 wird zusätzlich deutlich, dass unterhalb des Aufnahmeelementes 6 am Fußteil 4 wie im dargestellten Ausführungsbeispiel zwei Ausnehmungen 10 in Form einer Durchgangsbohrung eingebracht sind. Eine Ausnehmung 10 dient zur Aufnahme eines Befestigungsbolzens oder einer Befestigungsschraube für ein Gewicht 11. Das Gewicht 11 unterstützt das Herablassen des Endstückes bzw. der Endstücke in ein vorbereitetes Bohrloch.

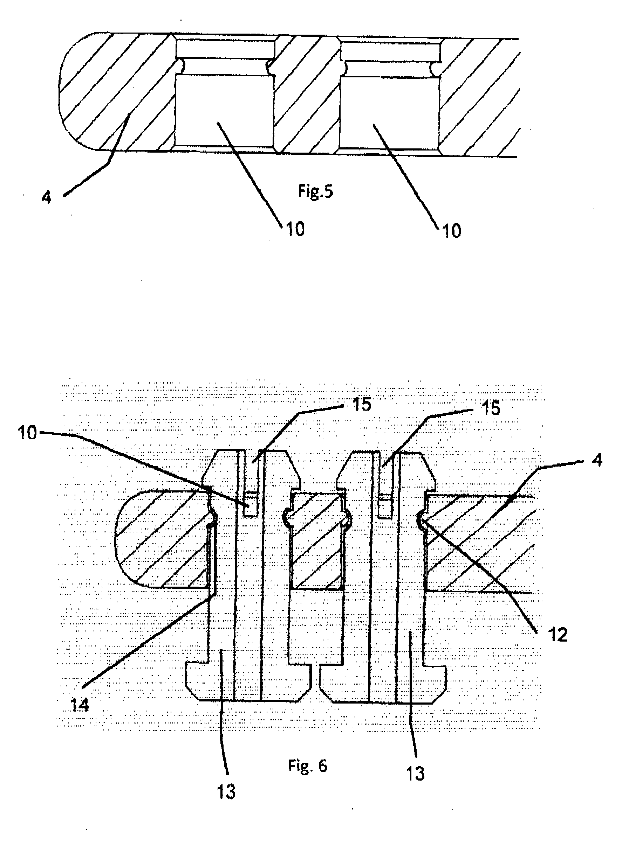

Die Festlegung des Befestigungsbolzens 12 ist in den Figuren 5 und 6 verdeutlicht. Dort ist gezeigt, dass in der Ausnehmung 10 in Form des Durchgangsloches ein Haltewulst 12 eingebracht ist. Ein zur Festlegung des Gewichtes 11 vorgesehener Befestigungsbolzen kann entsprechend einer vorteilhaften Ausgestaltung mit einer umlaufenden Haltenut 14 versehen werden. Haltenut 14 und Haltewulst 12 verrasten im eingeführten Zustand des Befestigungsbolzens 13 in der Ausnehmung 10 miteinander, so dass das Gewicht 11 zuverlässig in der Ausnehmung 10 gehalten ist. Sofern der Befestigungsbolzen 13 aus Kunststoff hergestellt ist, kann es zusätzlich vorteilhaft sein, ihn mit einem Schlitz 15 zu versehen, der ein Einführen in die Ausnehmung 10 zusätzlich erleichtert.

Um beim Eindringen des Endstückes in das Bohrloch eine turbulente Strömung an der äußere Oberfläche des Endstückes zu erzeugen, was den Einführvorgang erleichtert, kann dieses Endstück mindestens an der äußeren Oberfläche des Haltekörpers 3 eine wellenförmige Maserung 16 aufweisen. Die Maserung 16 trägt auch zu einer Verbesserung der Anhaftung der in das Bohrloch eingebrachten Suspension zur Fixierung der gesamten Erdwärmesonde an der äußeren Oberfläche des Endstückes bei.

Diese Maserung 16 kann wie in den Figuren 1 und 2 aus mehreren nebeneinander angeordneten wellenförmigen länglich geformten nutförmigen Vertiefungen 17 bestehen. Alternativ ist auch eine in den Abbildungen nicht dargestellte stegförmig über die Oberfläche des Haltekörpers 3 vorspringende Ausgestaltung der Maserung 16 denkbar.

Als zusätzlich vorteilhaft für die Handhabung der Endstücke auf der Baustelle hat sich erwiesen, wenn das Endstück mindestens an seinem Tragkörper 3 eine Beschichtung in einer Signalfarbe aufweist. Die Signalfarbe zeigt den vor Ort tätigen Fachleuten an, dass es sich bei dem Endstück um ein sicherheitsrelevantes Bauteil handelt, bei dessen Handhabung besondere Sorgfalt und Vorsicht angezeigt ist.

Um beim Eindringen des Endstückes in das Bohrloch wie oben bereits erwähnt eine turbulente Strömung an der äußere Oberfläche des Endstückes zu erzeugen, kann die Beschichtung mit Partikeln, beispielsweise Sandkörnern, angereichert werden, welche eine äußere angerauhte Oberfläche erzeugen. Als Beschichtungsmaterial ist eine Kunststofffarbe oder dergleichen vorteilhaft. Die angerauhte Oberfläche verbessert zusätzlich die Anhaftung der in das Bohrloch eingebrachten Suspension zur Fixierung der Erdwärmesonde an der äußeren Oberfläche des Endstückes.

### Bezugszeichenliste

- 1: Vorlaufleitung
- 2: Rücklaufleitung
- 3: Haltekörper
- 4: Fußteil
- 5: Verrastungsvorrichtung
- 6: Aufnahmeelement
- 7: Einschubteil
- 8: Ausnehmung
- 9: Aufnahmeelement
- 10: Ausnehmung
- 11: Gewicht
- 12: Haltewulst
- 13: Befestigungsbolzen
- 14: Haltenut
- 15: Schlitz
- 16: Maserung
- 17: Nut

## Patentansprüche

1. Endstück für das Rohrpaar einer Erdwärmesonde mit einem Haltekörper (3) für eine Vorlaufleitung (1) und eine Rücklaufleitung (2) einer Erdwärmesondenanlage, an dessen unterem, den leitungsabgewandten Ende ein im Querschnitt gegenüber dem Querschnitt des Haltekörpers (3) verkleinertes Fußteil (4) angeordnet ist,
**dadurch gekennzeichnet dass**
das Endstück eine Verrastungsvorrichtung aufweist, bestehend aus einem am Fußteil (4) angeordneten Aufnahmeelement (6) und einem am oberen, dem leitungszugewandten Ende angeordneten korrespondierenden Einschubteil (7), wobei die Verrastungsvorrichtung eine Kopplung zweier Endstücke durch Einführen des Einschubteiles (7) in das Aufnahmeelement (6) ermöglicht.

2. Endstück nach Anspruch 1,
**dadurch gekennzeichnet dass**
das Aufnahmeelement (6) eine parallel zur Mittellängsachse des Endstückes verlaufende nutförmige Ausnehmung (8) aufweist.

3. Endstück nach Anspruch 2,
**dadurch gekennzeichnet dass**
die Ausnehmung (8) im Querschnitt kreisförmig ausgebildet ist.

4. Endstück nach einem der Ansprüche 1- 3,
**dadurch gekennzeichnet dass**
an der dem Einschubteil (7) gegenüberliegenden Seite des Endstückes ein zusätzliches Aufnahmeelement (9) für ein Einschubteil (9) angeordnet ist.

5. Endstück nach einem der Ansprüche 1- 4,
**dadurch gekennzeichnet dass**
das Fußteil (4) mindestens eine Ausnehmung (10) zur Festlegung eines Gewichtes (11) aufweist.

6. Endstück nach Anspruch 6,
**dadurch gekennzeichnet dass**
die Ausnehmung (10) als Durchgangsbohrung ausgebildet ist, welche mit einer umlaufenden Wulst (12) zur Verengung des Bohrungsdurchmessers versehen ist.

7. Endstück nach einem der Ansprüche 5 oder 6,
**dadurch gekennzeichnet dass**
in die Ausnehmung (10) ein Befestigungsbolzen (13) einsetzbar ist.

8. Endstück nach Anspruch 7,
**dadurch gekennzeichnet dass**
der Befestigungsbolzen (13) eine umlaufende Haltenut (14) aufweist, in die der innerhalb der Durchgangsbohrung angeordnet Wulst (12) einrastbar ist.

9. Endstück nach einem der Ansprüche 1 bis 8,
**dadurch gekennzeichnet dass**
die äußere Oberfläche des Haltekörpers (3) eine wellenförmige Maserung (16) aufweist.

10. Endstück nach Anspruch 9,
**dadurch gekennzeichnet dass**
die Maserung (16) aus mehreren nebeneinander angeordneten wellenförmigen länglich geformten nutförmigen Vertiefungen besteht.

11. Endstück nach einem der Ansprüche 1 bis 10,
**dadurch gekennzeichnet dass**
das Endstück mindestens an seinem Tragkörper (3) eine Beschichtung in einer Signalfarbe aufweist.

12. Endstück nach Anspruch 11,
**dadurch gekennzeichnet dass**
die Beschichtung mit Partikeln angereichert ist, welche eine äußere angerauhte Oberfläche erzeugen.
